# EUROPÄISCHE PATENTSCHRIFT

(11) **EP 1 116 545 B1**
(45) Veröffentlichungstag und Bekanntmachung des Hinweises auf die Patenterteilung: **21.04.2004**
(21) Anmeldenummer: 99125225.5
(22) Anmeldetag: 17.12.1999
(51) Int. Cl.: B23K 15/00, C22C 19/05, F01D 5/00

(54) **Verbinden von Einkristall-Turbinenteilen**
Joining of single crystal turbine parts
Soudage de pièces de turbine en superalliage monocristallin

(43) Veröffentlichungstag der Anmeldung: 18.07.2001
(73) Patentinhaber: Lufthansa Technik AG, 22335 Hamburg (DE)
(72) Erfinder: Reinecken, Klaus, 22455 Hamburg (DE); Siry, Christian W., 22335 Hamburg (DE)
(74) Vertreter: Glawe, Delfs, Moll & Partner

(56) Entgegenhaltungen:
- US-A- 5 822 852
- S.S. BABU ET AL.: "Microstructural development in PWA-1480 electron beam welds- an atom probe field ion microscopy study" APPLIED SURFACE SCIENCE , Bd. 94/95, 1996, Seiten 280-287, XP000913775 USA

## Beschreibung

Die Erfindung betrifft das Verbinden von Metallteilen, die zum Einsatz in einer thermischen Turbine bestimmt sind, wobei wenigstens eines der zu verbindenden Metallteile aus einer Superlegierung auf der Basis von Nickel und/oder Kobalt besteht und dieses Metallteil mindestens im zu verschweißenden Bereich eine Einkristallstruktur oder eine durch gerichtete Erstarrung (directional solidification, DS) hergestellte Struktur aufweist.

Bei thermischen Turbinen wie bspw. Flugzeugstrahltriebwerken, sind gewisse Teile, insbesondere die Turbinenschaufeln, außerordentlichen Belastungen durch hohe Temperaturen (bis 1100°C) und/oder mechanischen Beanspruchungen ausgesetzt. Für diese Teile kommen hochfeste und temperaturbeständige Superlegierungen auf der Basis von Nickel oder Kobalt zum Einsatz, wobei die Festigkeitseigenschaften durch eine Einkristallstruktur oder durch gerichtete Erstarrung erzeugte Strukturen noch verbessert werden können. Beim Schweißen von Teilen aus einer solchen Superlegierung mit Einkristall-/DS-Struktur kann der Wärmeeintrag zu thermischen Spannungen führen, was aufgrund der Materialhärte eine erhöhte Gefahr von Rißbildung mit sich bringt. Störungen der Kristallstruktur durch die Schweißung können die Festigkeit des Materials und deren Eignung für den vorgesehenen Einsatz beeinträchtigen. Allgemein gelten Superlegierungen als schwer oder nicht schweißbar. Lediglich die Widerstandsschweißung von Turbinenschaufelspitzen aus Einkristall-/DS-Superlegierungen an die Turbinenschaufel ist vorgeschlagen worden (US-A-5,822,852). Andere Methoden zum Verbinden von Superlegierungsteilen mit Einkristall-/DS-Struktur, die im Stand der Technik bekannt sind, sind außerordentlich aufwendig.

Applied Surface Science, Band 94/95, 1996, Seite 280 bis 287 offenbart die Verwendung des Elektronenstrahlschweißens zum Verbinden von Metallteilen, die zum Einsatz in einer thermischen Turbine bestimmt sind und aus Superlegierungen bestehen können.

Der Erfindung liegt die Aufgabe zugrunde, den Aufwand bei der Verbindung von Turbinenteilen aus einer Nickel-/Kobaltsuperlegierung mit Einkristall-/DS-Struktur im zu verschweißenden Bereich zu reduzieren, wobei die Einkristall- bzw. DS-Struktur im Schweißbereich nicht oder allenfalls unwesentlich beeinträchtigt werden soll. Die Erfindung löst diese Aufgabe durch die Merkmale des Anspruchs 1, wobei eines der Metallteile mit Einkristall-/DS-Struktur im zu verschweißenden Bereich einen gegenüber der umgebenden Werkstückoberfläche erhöhten Ansatz aufweist. Alternativ kann eines der Metallteile mit Einkristall-/DS-Struktur im zu verschweißenden Bereich eine Vertiefung in der Werkstückoberfläche aufweisen.

Zunächst seien einige zum Verständnis der Erfindung wesentliche Begriffe erläutert.

Der Begriff thermische Turbinen bezeichnet Strömungsmaschinen, die die thermische Energie eines Gases oder von Wasserdampf in eine Rotationsbewegung umsetzen. Die Arbeitstemperatur dieser Turbinen kann bei einigen 100°C bis hin zu Temperaturen oberhalb von 1000 °C liegen. Ein bevorzugtes Anwendungsgebiet der Erfindung sind Flugzeugstrahl- und Turboproptriebwerke, jedoch ist es darauf nicht beschränkt. Möglich ist der Einsatz der Erfindung auch bei industriellen Gas- und Dampfturbinen z. B. im Kraftwerksbau, wo die Materialanforderungen zur Erzielung höherer Wirkungsgrade ständig steigen und daher zunehmend Nickel-/Kobalt-Superlegierungen mit Einkristall-/DS-Strukturen zum Einsatz kommen.

Ein Metallteil ist dann zum Einsatz in einer thermischen Turbine bestimmt, wenn es Teil dieser Turbine oder eines für deren Funktion erforderlichen Nebenaggregats (bspw. der Verdichter eines Strahltriebwerks) ist. Besonders vorteilhaft eignet sich die Erfindung für Schweißverbindungen an bewegten und/oder dem Heißgasstrom ausgesetzten Teilen wie bspw. Rotor- oder Statorschaufeln. Bei der Aufarbeitung einer Strahlturbine kann bspw. durch Anschweißen einer neuen Turbinenschaufelspitze an eine Turbinenschaufel der durch Verschleiß verursachte Materialabtrag ausgeglichen werden. Im Rahmen der Herstellung einer Turbine seien als Einsatzmöglichkeiten die Verbindung zweier Turbinenschaufelhälften sowie die Befestigung einer Turbinenschaufel am Rotor bzw. Stator genannt. Ein anderes Beispiel ist die Befestigung von nicht-tragenden Kühlelementen (z. B. Leitblechen für Kühlluft), welche selbst keinen erhöhten mechanischen Belastungen ausgesetzt sind und daher keine Einkristall-/DS-Struktur aufweisen, an Einkristall-Turbinenschaufeln. Die Erfindung ist nicht auf die genannten Beispiele beschränkt, sondern betrifft alle denkbaren Verbindungen von Metallteilen, die zum Einsatz in thermischen Turbinen bestimmt sind, sofern nur eines der Teile aus einer Nickel-/Kobalt-Superlegierung mit Einkristall- oder DS-Struktur besteht, insbesondere unabhängig davon, ob die Teile im zu verschweißenden Bereich erhöhten Belastungen ausgesetzt sind oder eine tragende Funktion besitzen, bzw. die Verbindung erhöhten Belastungen standhalten soll. Eines der Metallteile weist mindestens im zu verschweißenden Bereich eine Einkristall-Struktur oder eine durch gerichtete Erstarrung (directional solidification, DS) hergestellte Struktur auf. "Im zu verschweißenden Bereich" bedeutet dabei nicht notwendigerweise die unmittelbare Schweißstelle selbst, sondern bezeichnet denjenigen Bereich, in dem es im Verlaufe des Schweißvorgangs möglicherweise zu einer Beeinträchtigung der Kristallstruktur durch den Schweißvorgang kommen kann. Es handelt sich also insbesondere um Bereiche, die in der Nähe der Schweißstelle liegen können und in denen der zumindest weitgehende Erhalt der Einkristall- oder DS-Struktur wichtig ist für die Beibehaltung der thermischen und/oder mechanischen Widerstandsfähigkeit des zu verschweißenden Metallteils. Die Schweißstelle selbst kann, wie nachstehend unter Bezugnahme auf die Unteransprüche 2 bis 8 noch beschrieben, an einem Ansatz oder dergleichen des Metallteils angebracht werden, der selbst nichts zur strukturellen Integrität des Metallteils beiträgt und daher nicht notwendigerweise eine Einkristall- bzw. DS-Struktur aufweisen muß. Sofern das Metallteil jedenfalls in der Nähe eines solchen Ansatzes eine Einkristall- oder DS-Struktur aufweist, deren Erhalt für die mechanische Festigkeit und/oder Temperaturbeständigkeit des Metallteils von Bedeutung ist, weist dieses Metallteil im Bereich der Schweißstelle eine Einkristall- bzw. DS-Struktur im Sinne des genannten Anspruchsmerkmals auf.

Der Begriff Superlegierung ist dem Fachmann geläufig und wird bspw. erläutert in Ullmann's Encyclopedia Of Industrial Chemistry , 5. Auflage, Band A13, Seite 56 bis 64. Der Begriff wird im folgenden getrennt für die Basismetalle Nickel und Kobalt diskutiert. Der Basisstoff einer Legierung ist dabei derjenige Stoff mit dem höchsten Gewichtsanteil.

Ni-Superlegierungen auf der Basis von Ni-Cr-Legierungen verbinden außerordentliche Festigkeitseigenschaften mit hoher Temperaturdauerfestigkeit bis über 1000°C, weshalb sie der bevorzugte Werkstoff für Turbinenschaufeln von Flugzeugturbinen sind. Der Gewichtsanteil von Ni an der Superlegierung beträgt meist 55 bis 70 %. Der Gewichtsanteil von Cr liegt generell im Bereich von 5 bis 30 %. Wenn keine besonderen Anforderungen hinsichtlich des Oxidationswiderstands und des Korrosionswiderstands bei hohen Temperaturen vorliegen, ist ein Cr-Anteil von weniger als 15 %, vorzugsweise im Bereich von 5 bis 12 % ausreichend.

Der wichtigste Härtungsmechanismus für Ni-Superlegierungen ist die sogenannte Ausscheidungshärtung (precipitation hardening), bei welcher der Grundsubstanz γ (Ni) eine Ausscheidungssubstanz γ' (Ni₃Al) ähnlicher Kristallstruktur beigefügt ist. Der Gewichtsanteil des Ausscheidungsbildners Al an der Superlegierung liegt in vielen Fällen im Bereich von 4 bis 7 %. Neben Aluminium sind auch Titan (Ti) und Tantal (Ta) Ausscheidungsbildner; der Gesamtgewichtsanteil der Ausscheidungsbildner Al, Ti und Ta liegt gewöhnlich im Bereich von 4 bis 20 %, wobei je nach Legierung kein Ti und/oder kein Ta enthalten sein kann. Die Zugabe von Co im Bereich von 5 bis über 20 Gew.-%, meist zwischen 5 und 12 Gew.-%, führt zu einer Erhöhung der Lösungstemperatur der zweiten Phase γ' und kann zu einer Erhöhung der Dauerfestigkeit beitragen.

Ein anderer wichtiger Härtungsmechanismus ist die sogenannte Festlösungshärtung (solid solution strengthening), bei welcher Atome im Kristall des Grundmetalls durch Atome eines anderen Metalls ersetzt werden. Bei der Grundsubstanz Nickel sind bspw. Tantal, Molybdän und Wolfram wirkungsvolle Festlösungshärter. Demnach beträgt der Gesamtgewichtsanteil der Festlösungshärter Mo, W und Ta in vielen Fällen mehr als 10 %, wobei ein Gesamtanteil von 20 % selten überschritten wird.

Weitere Legierungszusätze mit Gewichtsanteilen von mehr 0,1 %, häufig mehr als 1 % sind Niob, Rhenium, Vanadium, Hafnium, Kohlenstoff, Yttriumoxid (Y₂O₃) und weitere Elemente, wobei die Legierungseigenschaften teilweise bereits durch den Zusatz von Spuren verändert werden können.

Neben Ni-Superlegierungen kommen auch Co-Superlegierungen zum Einsatz, insbesondere wenn keine erhöhten Anforderungen an die Festigkeit des Materials gestellt werden (z. B. Statorschaufeln). Co-Superlegierungen haben im allgemeinen höhere Schmelztemperaturen als Ni-Superlegierungen und sind bei einem Einsatz bei sehr hohen Temperaturen (oberhalb von 1000 °C) überlegen. Charakteristisch ist ein hoher Gewichtsanteil von Cr (20 bis 30 %) zur Verbesserung des Oxidationswiderstands. Der Anteil der Grundsubstanz Co liegt wie bei Ni in der Regel oberhalb von 40 %. Hinsichtlich der Anteile der Festlösungshärter Mo, W, Ta gilt das für die Ni-Superlegierungen gesagte entsprechend.

Die Erfindung widerlegt das Vorurteil, daß Metallteile aus Ni-/Co-Superlegierungen mit Einkristall-/DS-Struktur nur schlecht schweißbar seien und mit einer hohen Ausschußrate durch Rißbildung oder Kristallfehler im Bereich der Schweißung gerechnet werden muß. Durch die erfindungsgemäß vorgesehene Verwendung des Elektronenstrahlschweißens kann ein außerordentlich hoher Prozentsatz der Schweißungen (über 90 %) im Ergebnis ohne Materialfehler durchgeführt werden. Wenn man berücksichtigt, daß bei höchstbelasteten Turbinenschaufeln bereits der geringste Ansatz zur Rißbildung bspw. durch Kristallwachstumsfehler zum Ausschuß der so geschweißten Komponente führen kann, wird deutlich, daß mit Hilfe des erfindungsgemäßen Schweißverfahrens eine wirtschaftliche Schweißverbindung von Turbinenteilen aus Ni-/Co-Superlegierungen mit Einkristall-/DS-Struktur überhaupt erst möglich wird. Eine Ursache für den überraschenden Erfolg der Erfindung liegt möglicherweise darin, daß durch das bei der Schweißung im zu verschweißenden Bereich vorliegende Vakuum, welches beim Elektronenstrahlschweißen in aller Regel besser als 10⁻² mbar ist, eine Verunreinigung im Schweißbereich durch Oxidation reaktiver Legierungsbestandteile wie Al und Ti vermieden wird; durch chemische Reaktionen verursachte Verunreinigungen bilden einen wesentlichen Angriffspunkt für Rißbildungen und Kristallwachstumsfehler.

Während der Erfolg der Erfindung bereits bei verhältnismäßig schlechten Vakua im Bereich von 1 mbar eintritt, werden vorzugsweise Vakua im Bereich von 10⁻³ oder 10⁻⁴ mbar oder besser verwendet.

Die bevorzugten Werte der Elektronenstrahlparameter (Schweißgeschwindigkeit, Beschleunigungsspannung, Fokuslage, Strahlstrom, Arbeitsabstand) ergeben sich aus den Unteransprüchen 9 bis 13. Der Elektronenstrahl wurde zusätzlich mit einer im Stand der Technik bekannten Sinus-, Kreis- oder Dreiecks-Strahlablenkung moduliert.

Die zu schweißenden Metallteile können vor und/oder während der Schweißung mindestens im zu verschweißenden Bereich auf eine Temperatur von mehr als 400°C, vorzugsweise mehr als 700°C, weiter vorzugsweise 900 bis 1000°C erwärmt werden.

Diese Maßnahme dient zur Verminderung des durch die Schweißung hervorgerufenen lokalen Temperaturgradienten und damit zur Reduzierung von thermischen Spannungen. Die Versuche haben jedoch ergeben, daß überraschenderweise diejenigen Proben, welche nicht über die vom Elektronenstrahl bewirkte Erwärmung hinaus erwärmt oder vorgewärmt wurden, keine schlechteren und tendentiell sogar bessere Ergebnisse zeigten als die mit Vorwärmung durchgeführten Probeschweißungen.

Gemäß einem Aspekt der Erfindung kann eines der Turbinenteile aus der Superlegierung mit Einkristall-/DS-Struktur im zu verschweißenden Bereich einen gegenüber der umgebenden Werkstückoberfläche erhöhten Ansatz aufweisen. Der Begriff "Ansatz" umfaßt dabei eine Vielzahl möglicher Formungen. Im Fall einer Punktschweißung kann es sich etwa um einen Zapfen oder einen Kegel handeln, während bei einer länglichen Schweißnaht der Ansatz vorzugsweise von einem stegartigen Element gebildet wird. Der Ansatz kann jedoch beliebige andere Formungen aufweisen, insbesondere solche, die an die spezifische Formung des zu schweißenden Bereichs der Werkstückoberfläche angepaßt sind.

Die Erhöhung des Ansatzes gegenüber der umgebenden Werkstückoberfläche bezieht sich lediglich auf den Teil der Werkstückoberfläche, welcher dem Ansatz unmittelbar benachbart ist. Der Ansatz kann also auch im Werkstück versenkt sein, wie es z. B. bei der Ausführungsform der Fall ist, bei welcher der Ansatz durch den zwischen zwei parallelen Nuten in der Werkstückoberfläche verlaufenden Steg gebildet wird. Die Erhöhung eines solchen Steges bezieht sich also auf den Nutengrund der seitlich angrenzenden Nuten.

Durch den Ansatz am Werkstück wird einerseits ein Bereich geschaffen, welcher für die Anschweißung des weiteren Turbinenteils dient. Der Steg kann dabei teilweise angeschmolzen und in das anzuschweißende Material eingearbeitet werden, wodurch die Festigkeit der Verbindung verbessert wird. Der Ansatz kann mit Hilfe einer Auftragsschweißung bspw. von drahtförmigen Werkstoffen mit Hilfe des erfindungsgemäßen Schweißverfahrens hergestellt werden. Vorteilhafterweise wird der Ansatz jedoch während oder im Anschluß an die Herstellung der Turbinenkomponente mit Einkristall-/DS-Struktur an das Werkstück einstückig angeformt oder angegossen, was herstellungstechnisch keinen großen Aufwand erfordert und insbesondere unschädlich für die Kristallstruktur der Einkristall-/DS-Komponente im Bereich des angegossenen Ansatzes ist. Durch die Zwischensetzung eines einfach und schadlos anzugießenden Ansatzes wird effektiv der durch die Schweißung erhitzte Bereich von der einkristallinen Werkstückoberfläche räumlich entfernt, so daß der Teil des Ansatzes, welcher zwischen Werkstückoberfläche und zu verschweißendem Bereich angeordnet ist, als thermische Barriere wirkt, welche die lokale Erwärmung der einkristallinen Werkstückzone reduziert. Falls das anzuschweißende weitere Turbinenteil keine besondere tragende Funktion besitzt (wie bei einem Kühlblech), und an die Schweißverbindung damit keine erhöhten mechanischen Anforderungen zu stellen sind, kann es sich bei dem Ansatz um polykristallines Material handeln, welches aufgrund der geringeren Härte weniger rißanfällig ist. Vorzugsweise betragen die Abmessungen des Ansatzes in der Ebene der Werkstückoberfläche (bspw. die Stegbreite) 0,5 bis 1,5 mm, da die Schweißung dünnwandiger Komponenten bekanntlich weit weniger problematisch ist. Dies ist von besonderer Bedeutung, falls beide zu verschweißende Metallteile im zu verschweißenden Bereich eine Einkristall-/DS-Struktur aufweisen und eine hochfeste Schweißverbindung unter geringstmöglicher Störung der Kristallstruktur gefordert ist, und der Ansatz daher ebenfalls eine Einkristall-/DS-Struktur aufweist. Als Beispiel sei die Verschweißung zweier Turbinenschaufelhälften genannt. In solchen Fällen kann es zweckmäßig sein, Ansätze an beiden Metallteilen im zu verschweißenden Bereich vorzusehen, um durch die Schaffung dünnwandiger Bereiche die Rißbildungswahrscheinlichkeit weiter zu reduzieren.

Unter dem Gesichtspunkt der Schaffung einer thermischen Barriere sind auch solche Ausführungsformen umfaßt, bei der der Ansatz durch eine Verlängerung des eigentlichen Werkstücks, bspw. der Verlängerung der Turbinenschaufel an der Schaufelspitze gebildet wird. Die Erhöhung des Ansatzes gegenüber der umgebenden Werkstückoberfläche meint dann die Verlängerung über den benachbarten Teil des Werkstücks hinaus. Man kann dann auch von einem Fortsatz anstelle eines Ansatzes sprechen. Die zugrundeliegende Idee, nämlich die räumliche Entfernung der Schweißstelle von der rißanfälligen Einkristall-/DS-Struktur bzw. die Schaffung dünnwandiger Bereiche gilt in gleicher Weise für einen verlängerten Fortsatz des Werkstücks wie bspw. für eine stegartige Erhebung.

Bei einer anderen Ausführungsform der Erfindung kann anstelle eines erhöhten Ansatzes auch eine Vertiefung in der Werkstückoberfläche im zu verschweißenden Bereich vorteilhaft sein. Im Fall von Punktschweißungen kann es sich bspw. um eine Bohrung, im Fall einer länglichen Schweißnaht um eine in die Werkstoffoberfläche eingearbeitete Nut handeln. Die Verschweißung erfolgt zweckmäßigerweise an der Innenseite oder im Bereich der Außenkante der Vertiefung. Die Erzeugung einer Vertiefung bedeutet im wesentlichen die Schaffung eines materialfreien Raums, in welchen sich das durch die Schweißung erhitzte Material mit Einkristall-/DS-Struktur ausdehnen kann, wodurch thermische Spannungen abgebaut werden können, ohne daß es zur Rißbildung kommt. Während etwa bei einer ebenen Werkstückoberfläche ein solcher Spannungsabbau nur durch Ausdehnung bzw. Schrumpfung senkrecht zur Werkstückoberfläche erfolgen kann, wird durch die Vertiefung eine Ausdehnung oder Schrumpfung auch in der Ebene der Werkstückoberfläche ermöglicht; es wird ein weiterer Bewegungsfreiheitsgrad für das durch Erhitzung schrumpfende oder sich ausdehnende Material geschaffen.

Vorteilhafterweise sind Kanten und/oder Ecken, die infolge der Schaffung eines oben beschriebenen Ansatzes bzw. einer Vertiefung entstehen, abgerundet gestaltet, da bekanntermaßen bspw. scharfe Innenkanten von Nuten eine erhöhte Rißanfälligkeit mit sich bringen.

Die Erfindung wird im folgenden anhand vorteilhafter Ausführungsbeispiele mit Bezug auf die Zeichnungen erläutert. Es zeigen:
- Fig. 1 und 2:: Ein Querschliff-Foto der Schweißung eines polykristallinen Bleches an ein massives einkristallines Werkstück;
- Fig. 3:: Ein Querschliff-Foto der Schweißung eines polykristallinen Bleches an einen mit einem einkristallinen Werkstück verbundenen Steg;
- Fig. 4:: Analog Fig. 3 mit angeschmolzenem und in das Blech eingearbeiteten Steg;
- Fig. 5:: Ein Querschliff-Foto der Schweißung eines polykristallinen Bleches an ein massives einkristallines Werkstück im Bereich einer in die Werkstückoberfläche eingearbeiteten Nut.

### Beispiel 1

betrifft die Elektronenstrahl-Schweißverbindung zweier Turbinenteile, welche im wesentlichen eine Einkristallstruktur (oder eine DS-Struktur) aufweisen. Dabei kann es sich bspw. um die Verschweißung zweier Turbinenschaufelhälften handeln. Die bei den durchgeführten Versuchen vorteilhaft verwendeteten Werte für die Schweißparameter entsprechen im wesentlichen den in den Ansprüchen 8 bis 12 angegegebenen, wobei relativ niedrige Strahlströme im Bereich von 1 bis 5 mA und vergleichsweise hohe Beschleunigungsspannungen im Bereich von 100 bis 150 kV verwendet wurden (wie auch in den übrigen Beispielen). Daraus ergibt sich die Schweißleistung im Bereich von 0,1 bis 1 kW. Alternativ können Beschleunigungsspannungen im Bereich von 20 bis 40 kV und Strahlströme im Bereich von 20 bis 40 mA Anwendung finden. Auch andere Werte für Beschleunigungsspannung und Strahlstrom können geeignet sein, wobei vorzugsweise eine Schweißleistung im Bereich von 0,1 bis einige kW erzeugt wird. Die der Schweißbewegung überlagerte Strahlablenkung ist vorzugsweise sinus- oder kreisförmig.

### Beispiel 2

betrifft die Schweißverbindung eines im zu verschweißenden Bereich einkristallinen massiven Turbinenteils, bspw. einer Turbinenschaufel, mit einem polykristallinen Turbinenteil, bspw. ein Kühlelement aus Blech. Eine andere Anwendung besteht in der Befestigung von einkristallinen Turbinenschaufeln am Rotor bzw. Stator.

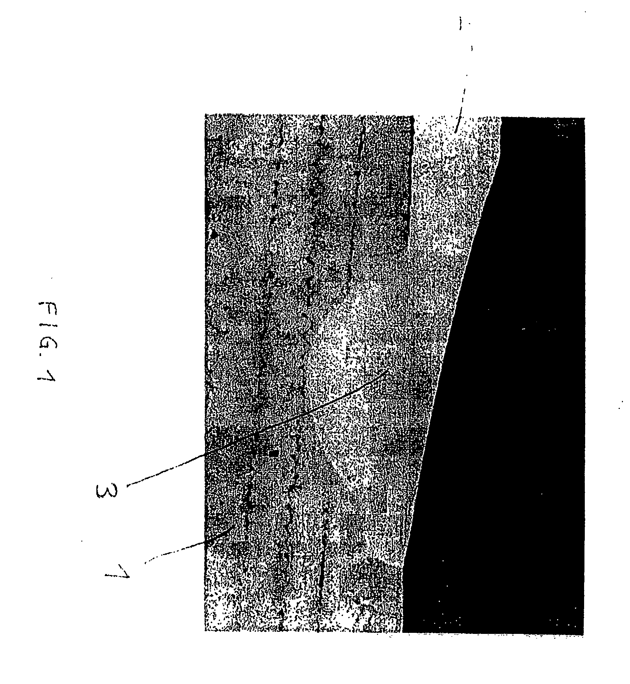

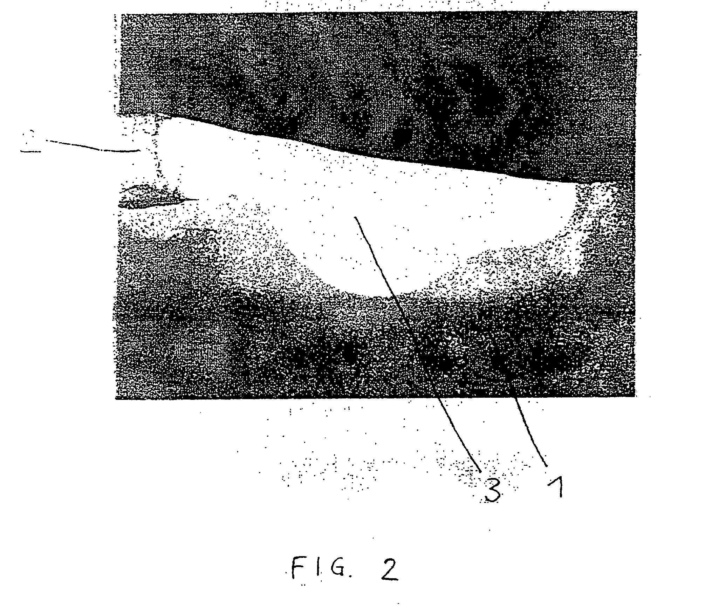

Die Fig. 1 und 2 zeigen ein massives Werkstück 1 aus einem Einkristall. Vor der Schweißung war die Werkstückoberfläche im zu verschweißenden Bereich im wesentlichen eben, wobei die Dicke des Werkstücks deutlich über 3 mm lag. Es handelt sich damit um eine besonders rißanfällige Geometrie, da der durch die Schweißung erhitzte Bereich der Werkstückoberfläche nur in eine Richtung, in den Fig. 1 und 2 in vertikaler Richtung, einen gewissen Dehnungs- und Schrumpfungsspielraum besitzt, während jede Dehnung oder Schrumpfung in der Ebene der Werkstückoberfläche nicht abgebaut werden kann. Das Werkstück 1 besteht im Fall der Fig. 1 aus der Superlegierung N5 (General Electric) auf Nickelbasis mit den Zusatzstoffen Cr (7 % Gew.-Anteil), Co (7,5 %), Mo (1,5 %), W (5 %), Ta (6,5 %), Al (6,2 %), Re (3 %), Hf (0,15 %). Im Fall der Fig. 2 besteht das Werkstück 1 aus der Ni-Superlegierung CMSX-4 (Rolls Royce) mit den Bestandteilen Cr (6,5 %), Co (9 %), Mo (0,6 %), W (6 %), Ta (6,5 %), Al (5,6 %), Ti (1 %), Re (3 %), Hf (0,1 %).

Sowohl in Fig. 1 als auch in Fig. 2 wurde ein Blech 2 aus Inco 625 der Stärke 0,4 mm durch Elektronenstrahlschweißung mit den in der Anwendung 1 genannten Werten für die Strahlparameter an das Werkstück 1 im Bereich 3 angeschweißt. Die Einwirkung des Elektronenstrahls führt im Bereich 3 zur lokalen Aufschmelzung des Blechs sowie eines oberflächennahen Bereiches des einkristallinen Werkstücks 1. Die Erstarrung des durch Aufschmelzung innig vermischten Materials führt zur Erzeugung der Schweißverbindung 3. Wie sowohl in Fig. 1 als auch in Fig. 2 zu sehen, ist die Qualität der Schweißung einwandfrei, es sind keinerlei Anzeichen für Risse im einkristallinen Werkstück zu sehen. Bei dem Rißansatz im äußerst linken Bereich der Schweißnaht am Übergang zum Blech in Fig. 2 handelt es sich nicht um einen durch die Schweißung verursachten Fehler.

Die Breite des im einkristallinen Werkstück 1 aufgeschmolzenen Bereiches direkt an der Werkstückoberfläche wird insbesondere durch die Weite des Elektronenstrahls an der Werkstückoberfläche bestimmt, welcher durch Veränderung der Fokuslage variiert werden kann. Die Tiefe der Aufschmelzung des einkristallinen Werkstücks 1 hängt u. a. von dem Wert der Beschleunigungsspannung des Elektronenstrahls sowie der Bestrahlungszeit ab. Bei den vorliegenden Schweißungen (Fig. 1 und 2) ist die Breite des aufgeschmolzenen Bereichs des einkristallinen Werkstücks 1 größer als die Tiefe, wobei das Verhältnis von Breite zu Tiefe im Bereich von 1 bis 2 liegt. Überraschenderweise wurden mit diesen Werten tendentiell bessere Resultate erzielt als bei Versuchen, bei denen die Aufschmelztiefe größer als die Breite war; aufgrund theoretischer Überlegungen würde eine verringerte Rißanfälligkeit eher für relativ tiefe Aufschmelzungen erwartet werden.

### Beispiel 3

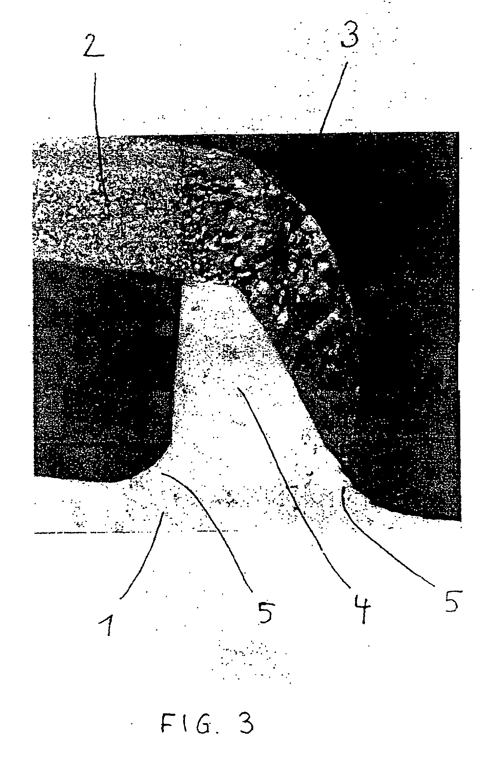

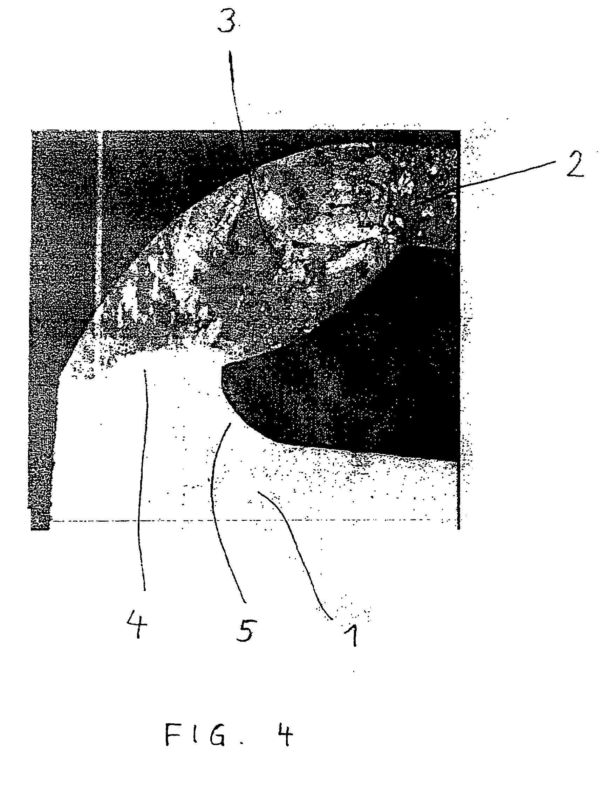

Das Beispiel 3 (sowie nachfolgendes Beispiel 4) betreffen die zuvor erläuterte vorteilhafte Weiterbildung der Erfindung, welche ggf. eigenständig schutzwürdig ist. In den in den Fig. 3 und 4 gezeigten Schweißungen ist das Werkstück 1 ebenfalls eine massive einkristalline Ni-Superlegierung. Es handelt sich ebenfalls um ein dickes (d. h. dicker als 2 oder 3 mm) Werkstück und damit um eine rißanfällige Geometrie. An die Werkstückoberfläche ist in dem Bereich, in welchem das Blech 2 anzuschweißen ist, ein Steg 4 angegossen worden, der ursprünglich einen im wesentlichen rechteckigen Querschnitt besessen hat, wobei die Innenkanten 5 zur Verringerung der Spannungskonzentration abgerundet sind. Das Blech wird nun nicht direkt an das Werkstück 1, sondern an den Steg 4 geschweißt. Die Werte der Schweißparameter entsprachen denen des vorherigen Beispiels. In diesem wie auch in den übrigen Beispielen kann eine vorbereitende Behandlung der Schweißstelle, bspw. eine Reinigung der Oberflächen durch Schleifen und/oder Reinigen mit alkoholgetränkten Lappen vorteilhaft sein.

Im Fall der Fig. 3 ist das Blech mit der zu verschweißenden Kante auf die Oberseite des Stegs gelegt worden und die Schweißung so durchgeführt, daß der Steg im Bereich der dem Blech abgewandten oberen Ecke zum großen Teil aufgeschmolzen wurde, wobei jedoch die andere, dem Blech 2 zugewandte obere Ecke intakt blieb. Durch die Erstarrung der vermischten Substanzen aus aufgeschmolzenem Blech 2 und aufgeschmolzenem Steg 4 wird eine feste Schweißverbindung im Bereich 3 erzeugt. Die Auflage des Blechs 2 auf dem intakten Teil der Oberseite des Stegs 4 stellt einen definierten, der Steghöhe entsprechenden Abstand des Blechs 2 von der Oberseite des Werkstücks 1 sicher.

Der Steg 4 war im Fall der Fig. 4 ursprünglich genau so hoch wie im Fall der Fig. 3. Der Steg ist dann durch die Schweißung zum großen Teil von oben abgeschmolzen worden, wobei die große Menge des angeschmolzenen Materials für eine besonders feste Schweißverbindung sorgt. Im Gegensatz zur Fig. 3 liegt das Blech 2 nicht auf einer Kante des Stegs auf, sondern ist ohne Nahtstelle übergangslos in den Steg eingeschmolzen, wodurch insbesondere die Schwingfestigkeit erhöht wird (die obere Stegkante in Fig. 3 kann bei Schwingungsbelastung des Blechs 2 leicht zu einem Abknicken oder Brechen des Blechs in diesem Bereich führen).

In beiden Fällen (Fig. 3 und 4) führt die Anschweißung des Blechs 2 an dem über die Werkstückoberfläche erhöhten Steg 4 zu einer im Vergleich zu den Beispielen aus Fig. 1 und 2 deutlichen Entfernung der Schweißstelle 3 (und damit dem Bereich thermischer Belastung) von der Werkstückoberfläche. In beiden Fällen bildet mindestens der nicht-aufgeschmolzene Sockel des Stegs 3 eine thermische Barriere, welche das Werkstück 1 vor einer zu starken Erwärmung mit der Folge mechanischer Spannungen und Rißbildungen schützt. Die thermische Belastung des Stegs ist in jedem Fall weniger kritisch, da die Spannungen durch Schrumpfung oder Ausdehnung des erhitzten Materials durch Bewegung in der Ebene parallel zur Werkstückoberfläche abgebaut werden können.

Anstelle des Angießens kann der Steg 4 auch durch Auftragsschweißung bspw. eines Drahtes an der Werkstückoberfläche angebracht werden. Entsprechende Versuche mittels eines Drahtzufuhrsystems waren ebenfalls erfolgreich, wobei abweichend von den übrigen Beispielen Strahlströme im Bereich von 2 bis 6 mA und Arbeitsabstand im eingeschränkteren Bereich von 500 bis 1200 mm (im Vergleich zum Arbeitsabstand von 200 bis 1500 mm der übrigen Beispiele) Verwendung fanden. Zusätzlich zur sinus- und kreisförmigen, der Schweißbewegung überlagerten Strahlablenkung wurde auch eine dreiecksförmige Strahlablenkung verwendet.

### Beispiel 4

betrifft die Befestigung eines Turbinenteils an einer in die Werkstückoberfläche eines einkristallinen Turbinenteils eingearbeiteten Vertiefung. In Bild 5 war das unmittelbar auf der Werkstückoberfläche aufliegende Blech 2 am Werkstück 1 zu verschweißen. Dazu wurde im Bereich der vorgesehenen Schweißstelle eine Nut mit ursprünglich etwa rechteckigem Querschnitt, jedoch abgerundeten Innenkanten 5 in die Oberfläche des Werkstücks 1 eingearbeitet. Mit Hilfe des Elektronenstrahls wurde sowohl die zu befestigende Kante des Blechs 2 als auch das Werkstück 1 im Bereich einer der Außenkanten der Nut 6 aufgeschmolzen. Auch hier erfolgt die Schweißverbindung durch die Erstarrung des innig vermischten aufgeschmolzenen Materials von Blech 2 und Werkstück 1 im Bereich der Außenkante der Nut. Die Aufschmelzung erfolgte über die gesamte entsprechende Innenseite der Nut bis zum Nutgrund.

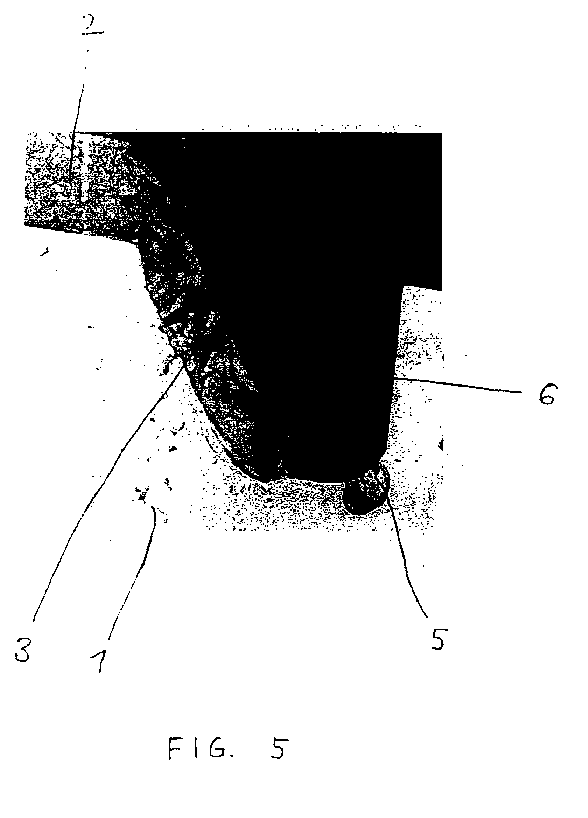

Die Anschweißung des Blechs an der Seitenfläche einer in die Werkstückoberfläche eingearbeiteten Nut, anstelle der Anschweißung direkt auf der Werkstückoberfläche (Fig. 1 und 2), hat den Vorteil, daß der durch die Schweißung erhitzte Teil des einkristallinen Werkstücks 1, im Beispiel der Fig. 5 also der links von der Nut sichtbare Bereich des Werkstücks, sich ebenfalls in der Ebene der Werkstückoberfläche zum Abbau von Spannungskonzentrationen bewegen kann, nämlich nach rechts (Ausdehnung) bzw. nach links (Schrumpfung) im Beispiel der Fig. 5.

## Patentansprüche

1. Verwendung des Elektronenstrahlschweißens zum Verbinden von Metallteilen mit den folgenden Merkmalen:
a) die Metallteile sind zum Einsatz einer thermischen Turbine bestimmt,
b) wenigstens eines der zu verbindenden Metallteile besteht aus einer Superlegierung auf der Basis von Ni und/oder Co,
b1) dieses Metallteil weist mindestens im zu verschweißenden Bereich eine Einkristallstruktur oder eine durch gerichtete Erstarrung (directional solidification, DS) hergestellte Struktur auf,
**dadurch gekennzeichnet, daß** eines der Metallteile mit Einkristall-/DS-Struktur im zu verschweißenden Bereich einen gegenüber der umgebenden Werkstückoberfläche erhöhten Ansatz aufweist.

2. Schweißverfahren nach Anspruch 1, **dadurch gekennzeichnet, daß** der Ansatz durch einen zwischen zwei parallelen Nuten in der Werkstückoberfläche verlaufenden Steg gebildet wird.

3. Schweißverfahren nach Anspruch 1, **dadurch gekennzeichnet, daß** der Ansatz durch einen am Werkstück angebrachten Steg gebildet wird.

4. Verwendung des Elektronenstrahlschweißens zum Verbinden von Metallteilen mit den folgenden Merkmalen:
a) die Metallteile sind zum Einsatz einer thermischen Turbine bestimmt,
b) wenigstens eines der zu verbindenden Metallteile besteht aus einer Superlegierung auf der Basis von Ni und/oder Co,
b1) dieses Metallteil weist mindestens im zu verschweißenden Bereich eine Einkristallstruktur oder eine durch gerichtete Erstarrung (directional solidification, DS) hergestellte Struktur auf,
**dadurch gekennzeichnet, daß** eines der Metallteile mit Einkristall-/DS-Struktur im zu verschweißenden Bereich eine Vertiefung in der Werkstückoberfläche aufweist.

5. Schweißverfahren nach Anspruch 4, **dadurch gekennzeichnet, daß** die Vertiefung durch eine Nut in der Werkstoffoberfläche gebildet wird.

6. Schweißverfahren nach einem der Ansprüche 1 bis 5, **dadurch gekennzeichnet, daß** die Kanten und/oder Ecken des Ansatzes bzw. der Vertiefung abgerundet sind.

7. Schweißverfahren nach einem der Ansprüche 1 bis 6, **dadurch gekennzeichnet, daß** die Abmessungen des Ansatzes bzw. der Vertiefung in der Ebene der Werkstückoberfläche im Bereich von 0,5 bis 1,5 mm liegen.

8. Schweißverfahren nach einem der Ansprüche 1 bis 7, **dadurch gekennzeichnet, daß** die Schweißgeschwindigkeit im Bereich von 4 bis 20 mm/sec, vorzugsweise 5 bis 10 mm/sec liegt.

9. Schweißverfahren nach einem der Ansprüche 1 bis 8, **dadurch gekennzeichnet, daß** die Beschleunigungsspannung des Elektronenstrahls im Bereich von 30 bis 150 kV, vorzugsweise 100 bis 150 kV liegt.

10. Schweißverfahren nach einem der Ansprüche 1 bis 9, **dadurch gekennzeichnet, daß** der Strahlfokus in einem Abstand von 0 bis 40 mm vor oder hinter der zu schweißenden Kontaktfläche liegt.

11. Schweißverfahren nach einem der Ansprüche 1 bis 10, **dadurch gekennzeichnet, daß** der Elektronenstrahlstrom im Bereich von 1 bis 40 mA, vorzugsweise 1 bis 5 mA liegt

12. Schweißverfahren nach einem der Ansprüche 1 bis 11, **dadurch gekennzeichnet, daß** der Abstand der Elektronenstrahl-Fokussierlinse von der zu schweißenden Kontaktfläche im Bereich von 200 bis 1500 mm, vorzugsweise 500 bis 1200 mm liegt.

13. Schweißverfahren nach einem der Ansprüche 1 bis 12, **dadurch gekennzeichnet, daß** die zu schweißenden Metallteile vor und während der Schweißung keine Erwärmung über die vom Elektronenstrahl bewirkte Erwärmung hinaus erfahren.

14. Schweißverfahren nach einem der Ansprüche 1 bis 13, **dadurch gekennzeichnet, daß** es in einem Vakuum von besser als 10⁻² mbar, vorzugsweise besser als 10⁻³ mbar, weiter vorzugsweise besser als 10⁻⁴ mbar an der Schweißstelle durchgeführt wird.

15. Schweißverfahren nach einem der Ansprüche 1 bis 14, **dadurch gekennzeichnet, daß** der Gewichtsanteil des Basisstoffes Ni oder Co an der Superlegierung mehr als 40 %, weiter vorzugsweise mehr als 50 %, weiter vorzugsweise mehr als 60 % beträgt.

16. Schweißverfahren nach einem der Ansprüche 1 bis 15, **dadurch gekennzeichnet, daß** der Gewichtsanteil des Zusatzstoffes Cr an der Superlegierung im Bereich von 5 bis 30 % liegt.

17. Schweißverfahren nach einem der Ansprüche 1 bis 16, **dadurch gekennzeichnet, daß** der Gewichtsanteil des Zusatzstoffes Al an der Superlegierung im Bereich von 0,5 bis 10 %, vorzugsweise 3 bis 8 %, weiter vorzugsweise 4,5 bis 6,5 % beträgt.

18. Schweißverfahren nach einem der Ansprüche 1 bis 17, **dadurch gekennzeichnet, daß** der Gesamtgewichtsanteil der Zusatzstoffe Al, Ti und Ta an der Superlegierung im Bereich von 4 bis 20 %, vorzugsweise 4 bis 8 % liegt.

19. Schweißverfahren nach einem der Ansprüche 1 bis 18, **dadurch gekennzeichnet, daß** der Gesamt gewichtsanteil der Zusatzstoffe Mo, W und Ta an der Superlegierung im Bereich von 3 bis 20 %, vorzugsweise 9 bis 17 %, weiter vorzugsweise 11 bis 15 % liegt.

## Claims

1. Use of electron beam welding for the bonding of metal parts, having the following features:
a) the metal parts are intended for use in a thermal turbine,
b) at least one of the metal parts to be bonded consists of a super alloy based on Ni and/or Co,
b1) this metal part has a single-crystal structure at least in the zone to be welded or has a structure produced by directional solidification (DS),
**characterised in that** one of the metal parts having single-crystal/DS structure has in the zone to be welded a projection which is raised with respect to the surrounding workpiece surface.

2. A welding process according to Claim 1, **characterised in that** the projection is formed by a web extending between two parallel grooves in the workpiece surface.

3. A welding process according to Claim 1, **characterised in that** the projection is formed by a web applied to the workpiece.

4. Use of electron beam welding for the bonding of metal parts, having the following features:
a) the metal parts are intended for use in a thermal turbine,
b) at least one of the metal parts to be bonded consists of a super alloy based on Ni and/or Co,
b1) this metal part has a single-crystal structure at least in the zone to be welded or has a structure produced by directional solidification (DS),
**characterised in that** one of the metal parts having single-crystal/DS structure has in the zone to be welded a recess in the workpiece surface.

5. A welding process according to Claim 4, **characterised in that** the recess is formed by a groove in the workpiece surface.

6. A welding process according to any one of Claims 1 to 5, **characterised in that** the edges and/or corners of the projection or recess are rounded.

7. A welding process according to any one of Claims 1 to 6, **characterised in that** the dimensions of the projection or the recess in the plane of the workpiece surface are in the range of from 0.5 to 1.5 mm.

8. A welding process according to any one of Claims 1 to 7, **characterised in that** the welding rate is in the range of from 4 to 20 mm/sec, preferably 5 to 10 mm/sec.

9. A welding process according to any one of Claims 1 to 8, **characterised in that** the acceleration voltage of the electron beam is in the range of from 30 to 150 kV, preferably 100 to 150 kV.

10. A welding process according to any one of Claims 1 to 9, **characterised in that** the beam focus is at a distance of 0 to 40 mm in front of or behind the contact surface to be welded.

11. A welding process according to any one of Claims 1 to 10, **characterised in that** the electron beam current is in the range of from 1 to 40 mA, preferably 1 to 5 mA.

12. A welding process according to any one of Claims 1 to 11, **characterised in that** the distance of the electron beam focussing lens from the contact surface to be welded is in the range of from 200 to 1500 mm, preferably 500 to 1200 mm.

13. A welding process according to any one of Claims 1 to 12, **characterised in that** the metal parts to be welded do not undergo any heating before or during the welding beyond the heating induced by the electron beam.

14. A welding process according to any one of Claims 1 to 13, **characterised in that** it is carried out in a vacuum of better than 10⁻² mbar, preferably better than 10⁻³ mbar, more preferably better than 10⁻⁴ mbar at the welding point.

15. A welding process according to any one of Claims 1 to 14, **characterised in that** the percentage by weight of the basic material Ni or Co in the super alloy is more than 40 %, more preferably more than 50 %, more preferably more than 60 %.

16. A welding process according to any one of Claims 1 to 15, **characterised in that** the percentage by weight of the added material Cr in the super alloy is in the range of from 5 to 30 %.

17. A welding process according to any one of Claims 1 to 16, **characterised in that** the percentage by weight of the added material Al in the super alloy is in the range of from 0.5 to 10 %, preferably 3 to 8 %, more preferably 4.5 to 6.5 %.

18. A welding process according to any one of Claims 1 to 17, **characterised in that** the percentage by weight of the added materials Al, Ti and Ta in the super alloy is in the range of from 4 to 20 %, preferably 4 to 8 %.

19. A welding process according to any one of Claims 1 to 18, **characterised in that** the percentage by weight of the added materials Mo, W and Ta in the super alloy is in the range of from 3 to 20 %, preferably 9 to 17 %, more preferably 11 to 15 %.

## Revendications

1. Utilisation de la soudure par faisceau électronique pour l'assemblage de pièces métalliques, présentant les caractéristiques suivantes :
a) les pièces métalliques sont destinées à être utilisées dans une turbine thermique,
b) au moins l'une des pièces métalliques à assembler est constituée d'un superalliage à base de Ni et/ou Co,
b1) cette pièce métallique présente, au moins dans la zone à souder, une structure monocristalline ou une structure réalisée par solidification dirigée (Directional Solidification, DS),
**caractérisée en ce que** l'une des pièces métalliques à structure monocristalline/DS présente, dans la zone à souder, un appendice en relief par rapport à la surface environnante de la pièce.

2. Procédé de soudage selon la revendication 1, **caractérisé en ce que** l'appendice est formé par une nervure s'étendant entre deux rainures parallèles dans la surface de la pièce.

3. Procédé de soudage selon la revendication 1, **caractérisé en ce que** l'appendice est formé par une nervure rapportée sur la pièce.

4. Utilisation du soudage par faisceau électronique pour l'assemblage de pièces métalliques, présentant les caractéristiques suivantes :
a) les pièces métalliques sont destinées à être utilisées dans une turbine thermique,
b) au moins l'une des pièces métalliques à assembler est constituée d'un superalliage à base de Ni et/ou Co,
b1) cette pièce métallique présente, au moins dans la zone à souder, une structure monocristalline ou une structure réalisée par solidification dirigée (Directional Solidification, DS),
**caractérisée en ce que** l'une des pièces métalliques à structure monocristalline/DS présente, dans la zone à souder, un renfoncement dans la surface de la pièce.

5. Procédé de soudage selon la revendication 4, **caractérisé en ce que** le renfoncement est formé par une rainure dans la surface de la pièce.

6. Procédé de soudage selon l'une des revendications 1 à 5, **caractérisé en ce que** les bords et/ou angles de l'appendice ou du renfoncement sont arrondis.

7. Procédé de soudage selon l'une des revendications 1 à 6, **caractérisé en ce que** les dimensions de l'appendice ou du renfoncement dans le plan de la surface de la pièce se situent entre 0,5 et 1,5 mm.

8. Procédé de soudage selon l'une des revendications 1 à 7, **caractérisé en ce que** la vitesse de soudage est de l'ordre de 4 à 20 mm/sec, de préférence de 5 à 10 mm/sec.

9. Procédé de soudage selon l'une des revendications 1 à 8, **caractérisé en ce que** la tension d'accélération du faisceau d'électrons est de l'ordre de 30 à 150 kV, de préférence de 100 à 150 kV.

10. Procédé de soudage selon l'une des revendications 1 à 9, **caractérisé en ce que** le foyer du faisceau se trouve à une distance de 0 à 40 mm devant ou derrière la surface de contact à souder.

11. Procédé de soudage selon l'une des revendications 1 à 10, **caractérisé en ce que** le courant du faisceau d'électrons se situe entre 1 et 40 mA, de préférence entre 1 et 5 mA.

12. Procédé de soudage selon l'une des revendications 1 à 11, **caractérisé en ce que** la distance entre la lentille de focalisation du faisceau d'électrons et la surface de contact à souder se situe entre 200 et 1 500 mm, de préférence entre 500 et 1 200 mm.

13. Procédé de soudage selon l'une des revendications 1 à 12, **caractérisé en ce que** les pièces métalliques à souder ne subissent, avant et pendant la soudure, aucun échauffement supérieur à l'échauffement provoqué par le faisceau d'électrons.

14. Procédé de soudage selon l'une des revendications 1 à 13, **caractérisé en ce qu'**il est mis en oeuvre sous un vide supérieur à 2 Pa (10⁻² mbars), de préférence supérieur à 0,2 Pa (10⁻³ mbars), de préférence encore supérieur à 0,02 Pa (10⁻⁴ mbars) au point de soudure.

15. Procédé de soudage selon l'une des revendications 1 à 14, **caractérisé en ce que** la proportion en poids de la substance de base (Ni) ou (Co) dans le superalliage est supérieure à 40 %, de préférence supérieure à 50 %, de préférence encore supérieure à 60 %.

16. Procédé de soudage selon l'une des revendications 1 à 15, **caractérisé en ce que** la proportion en poids de l'additif (Cr) dans le superalliage se situe entre 5 et 30 %.

17. Procédé de soudage selon l'une des revendications 1 à 16, **caractérisé en ce que** la proportion en poids de l'additif (Al) dans le superalliage se situe entre 0,5 et 10 %, de préférence entre 3 et 8 %, de préférence encore entre 4, 5 et 6,5 %.

18. Procédé de soudage selon l'une des revendications 1 à 17, **caractérisé en ce que** la proportion totale en poids des additifs (Al, Ti, Ta) dans le superalliage, se situe entre 4 et 20%, de préférence entre 4 et 8 %.

19. Procédé de soudage selon l'une des revendications 1 à 18, **caractérisé en ce que** la proportion totale en poids des additifs (Mo, W) et (Ta) dans le superalliage se situe entre 3 et 20 %, de préférence entre 9 et 17 %, de préférence encore entre 11 et 15 %.
